# EUROPEAN PATENT SPECIFICATION

(11) **EP 3 090 522 B1**
(45) Date of publication and mention of the grant of the patent: **23.05.2018**
(21) Application number: 14828159.5
(22) Date of filing: 22.12.2014
(51) Int. Cl.: H04L 29/06, H04W 12/04, H04W 12/10, H04L 9/08, H04L 9/32

(54) **METHOD OF SECURE TRANSMISSION OF PUSH MESSAGES**
VERFAHREN ZUR GESICHERTEN ÜBERTRAGUNG VON PUSH-NACHRICHTEN
PROCÉDÉ DE TRANSMISSION SECURISÉE DE MESSAGES PUSH

(30) Priority: 31.12.2013 EP 13306902
(43) Date of publication of application: 09.11.2016
(73) Proprietor: Gemalto SA, 92190 Meudon (FR)
(72) Inventor: CHAN, Keng Kun, F-92190 Meudon (FR); SHARMA, Vikram, F-92190 Meudon (FR); LI, Zhiping, F-92190 Meudon (FR); ILMY, Muhammad Bahari, F-92190 Meudon (FR)
(74) Representative: Delaval, Guillaume Laurent
(86) International application number: PCT/EP2014/079087
(87) International publication number: WO 2015/101544

(56) References cited:
- WO-A1-2004/021663
- US-A- 5 729 608
- US-A1- 2010 316 217
- US-B1- 6 842 628
- "Push Access Protocol ; OMA-TS-PAP-V2_3-20111122-A", OPEN MOBILE ALLIANCE (OMA), 4330 LA JOLLA VILLAGE DR., SUITE 110 SAN DIEGO, CA 92122 ; USA, no. 2.3, 22 November 2011 (2011-11-22), pages 1-51, XP064139283,
- JONAS BRUSTEL ET AL: "A Universal Push Service for Mobile Devices", COMPLEX, INTELLIGENT AND SOFTWARE INTENSIVE SYSTEMS (CISIS), 2012 SIXTH INTERNATIONAL CONFERENCE ON, IEEE, 4 July 2012 (2012-07-04), pages 40-45, XP032208245, DOI: 10.1109/CISIS.2012.105 ISBN: 978-1-4673-1233-2
- "Mobile Broadcast Services ; OMA-TS-BCAST_Services-V1_1-20110105-D", OMA-TS-BCAST_SERVICES-V1_1-20110105-D, OPEN MOBILE ALLIANCE (OMA), 4330 LA JOLLA VILLAGE DR., SUITE 110 SAN DIEGO, CA 92122 ; USA , no. 1.1 5 January 2011 (2011-01-05), pages 1-326, XP064031712, Retrieved from the Internet: URL:ftp/Public_documents/BCAST/BCASTv1_1/P ermanent_documents/ [retrieved on 2011-01-05]

## Description

### FIELD OF THE INVENTION

The present invention relates to the transmission of push messages from a sender server to several terminals and in particular to a method for establishing a secure communication between a user terminal comprising a SIM application and a push manager server.

### PRIOR ART OF THE INVENTION

Usually, a brand server sends push advisement messages to several push servers via a transmission protocol. Each push server serves as a gateway between the brand server and mobile terminals. Each push server is used by a developer of an application program installed in a mobile terminal to transmit push advisement messages to the application program.

More particularly, a push server relays a push advisement message sent from the brand server to at least a mobile terminal to which it is connected via a transmission protocol.

Conventional push servers, when transmitting push advisement messages to mobile terminals do not guarantee that push advisement messages come from an authorized brand server. Therefore, unauthorised push advisement messages can be sent to mobile terminals.

The technical specification provided by the open mobile alliance (OMA) and referenced OMA-TS-BCAST_Services-V1_1-20110105-D, draft version 1.1, January 5, 2011, describes mobile broadcast services.

### SUMMARY OF THE INVENTION

The present invention provides a method for establishing a secure communication between a user terminal comprising a SIM application and a push manager server, when said SIM application detects that there is no signature key configured, said method triggers the following steps:
- generating by said SIM application a random client number Rc,
- sending, to the push manager server, said random client number Rc, an application proprietary protocol related fields and a session id,
- generating by said push manager server a random server number Rs,
- generating by said push manager server a first signature key, the first signature key being derived from the random client number Rc, the random server number Rs and a shared string known by the push server and the SIM application using a cryptographic method,
- sending, to said SIM application, said random server number Rs, said first signature key and said session id,
- checking said session id by said SIM application,
- generating by said SIM application a second signature key if said session id received from the push manager server is similar to said session id sent by said SIM application, the second signature key being derived from the random client number, the random server number and the shared string using the same cryptographic method as the one used to generate the first signature key;
- decreasing by said SIM application a provision counter by 1,
- generating by said SIM application a status code, said status code indicating if the second signature key is successfully generated or unsuccessfully generated, the second signature key being considered as successfully generated if it is identical to the first signature key;
- generating by said SIM application a signed acknowledgment, said signed acknowledgment being generated by using the second signature key to encrypt the status code,
- sending, to the push message server, said signed acknowledgment and said session id,
- decrypting said encrypted status code by using the first signature key, if said status code is:
   ∘ successful, then the secure communication is established,
   ∘ unsuccessful, then the secure communication is not established.

In another aspect of the present invention, the second signature key is generated using the proprietary Hash-based Message Authentication Code cryptography.

In another aspect of the present invention, when the secure communication is not established the push manager server triggers the following steps:
- Sending, from the push manager server, a message of triggering to the SIM application,
- checking if :
   ∘ the TPDA to send back the MO is configured,
   ∘ the provision counter is greater than 0, and
   ∘ the second signature key is configured.

In another aspect of the present invention, when the TPDA to send back the MO is configured, the provision counter is greater than 0, and the second signature key is not configured, then the steps of the method for establishing a secure communication between a user terminal comprising a SIM application and a push manager server are triggered.

In another aspect of the present invention, when the TPDA to send back the MO is configured, the provision counter is greater than 0, and the second signature key is configured, then the SIM application send the signed acknowledgement and the session id to the push manager server.

In another aspect of the present invention, the signed acknowledgement is generated by using the second signature key to encrypt the status code.

### BRIEF DESCRIPTION OF THE INVENTION

Other characteristics and advantages of the present invention will become apparent upon reading the following description of embodiments, which are naturally given by way of non-limiting examples, and in the attached drawing, in which:

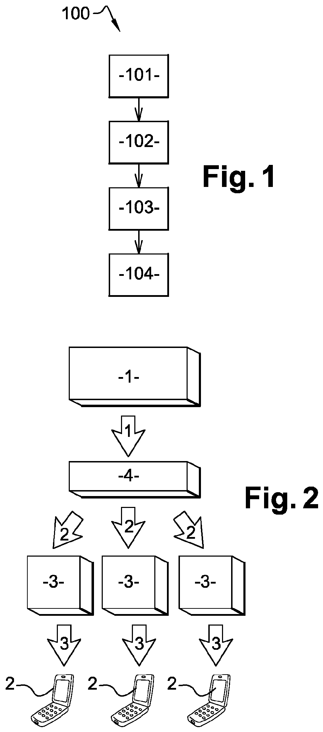

- Figure 1 depicts a not limited embodiment of a method for transmitting push messages from sender server to several terminals according to the invention,

In another aspect of the present invention, when the secure communication is not established the push manager server triggers the following steps:
- Sending, from the push manager server, a message of triggering to the SIM application,
- checking if :
   ∘ the TPDA to send back the MO is configured,
   ∘ the provision counter is greater than 0, and
   ∘ the second signature key is configured.

In another aspect of the present invention, when the TPDA to send back the MO is configured, the provision counter is greater than 0, and the second signature key is not configured, then the steps of the method for establishing a secure communication between a user terminal comprising a SIM application and a push manager server are triggered.

In another aspect of the present invention, when the TPDA to send back the MO is configured, the provision counter is greater than 0, and the second signature key is configured, then the SIM application send the signed acknowledgement and the session id to the push manager server.

In another aspect of the present invention, the signed acknowledgement is generated by using the second signature key to encrypt the status code.

### BRIEF DESCRIPTION OF THE INVENTION

Other characteristics and advantages of the present invention will become apparent upon reading the following description of embodiments, which are naturally given by way of non-limiting examples, and in the attached drawing, in which:
- Figure 1 depicts a method for transmitting push messages from sender server to several terminals
- Figure 2 illustrates an architecture adapted and construed to perform the method for transmitting push messages from sender server to several terminals
- Figure 3 depicts a not limited embodiment of a method for establishing a secure communication between a user terminal comprising a SIM application and a push manager server,
- Figure 4 illustrates an example of generating a signature key according to the invention.

The same references are used in different figures to designate same elements.

### DETAILED DESCRIPTION OF THE INVENTION

Figure 1 depicts a method 100 for transmitting push messages from sender server 1 to several terminals 2. Figure 2 illustrates an architecture adapted and construed to perform the method 100.

The method 100 comprises a step of sending 101, from the sender server 1, a push message to three push manager servers 3, the push message being sent via a secure communication protocol. The secure communication protocol is, for instance, the Hypertext Transfer Protocol Secure (also known as HTTPS). Furthermore, a username and a password are sent with the push message. So, the sender server needs to send the push message with the username and password information in HTTPS. This prevents unauthorized server to launch message as it needs to present the username and the password information.

In a not limited example, the sender server 1 belongs to a brand and is used to send marketing campaigns. In this not limited example, the push message is a marketing campaign.

The method 100 comprises also a step 102 of distributing the push message to the three push manager servers 3, the distributing being realized by a global smart message service 4, such as for example the Netsize Global Smart Message Service.

Using Netsize Global Smart Message Service, allows launching secure smart message campaign through following:
- Simple Object Access Protocol Application Programming Interface (also known as SOAP API WebServices). So, the brand can integrate their system with Netsize with using SOAP API that run on HTTPS. The brand needs to pass the username and password information in the SOAP XML. This prevent unauthorized brand to launch the secure smart message campaign as it needs to present the username and the password information.
- SaaS GUI. So, the brand people can login to Netsize SaaS GUI that run on HTTPS from their browser. The login requires username and password. This will prevent unauthorized brand people to login to the Netsize SaaS GUI.

In this example, the global smart message service 4 sends the campaign created by the brand to the three connected push manager server 3. The communication between the global smart message service 4 and the three connected push manager server 3 is performed through HTTPS connections. Moreover, username and password are used to authenticate the push server 1.

Furthermore, the method 100 comprises a step of adding 103 a digital signature to the push message received by the push manager servers 3. In a not limited embodiment, the digital signature mechanism uses the MAC4 3-DES CBC algorithm.

The method 100 comprises also a step 104 of sending, from each push manager server 3, the push message and the digital signature to the three terminals 1. In not limited embodiments, the three terminals are mobile terminals or smartphones.

The digital signature allows adding an applicative key allowing to transmit secure push message between the push manager server 3 and the terminals 2.

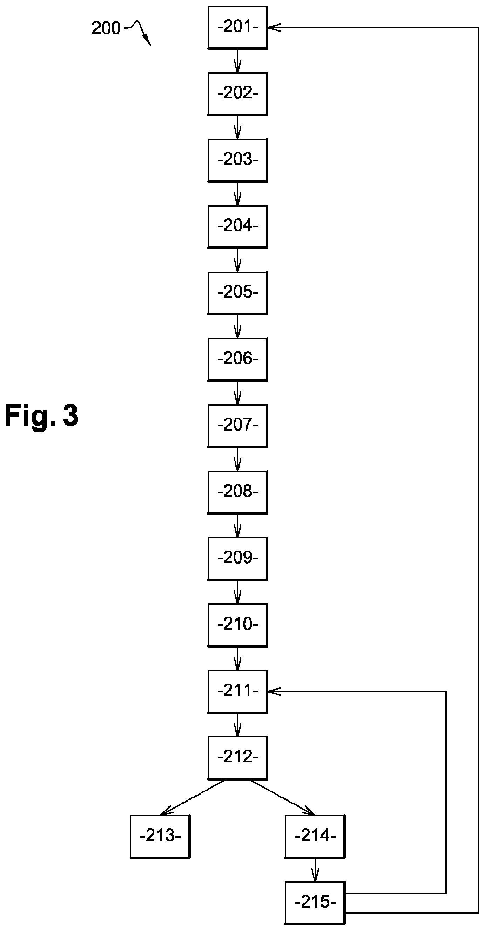

The figure 3 depicts a not limited embodiment of a method 200 for establishing a secure communication between a user terminal 2 comprising a SIM application and a push manager server 3.

According to the method 200, when the SIM application detects that there is no applicative key configured, the method 200 triggers the following steps. In other terms, when the terminal 2 starts, the SIM application (also named SIM applet) detects that there is no applicative key configured in the SIM Application 10. The SIM application triggers automatically the followings steps.

More particularly, the method 200 comprises a step 201 of generating a random client number. The random client number is generated by the SIM application. In a not limited embodiment, the random client number is of 32 bytes or more. In a not limited embodiment, the random client number is generated by an integrated circuit card identifier (also known as ICCID) using a unique number given to every SIM card.

The method 200 comprises a step 202 of sending, to the push manager server 3, the random client number, an application proprietary protocol related fields and a session id. It could be noted that the session id is used to maintain throughout the key exchange session.

The method 200 comprises also the step 203 of generating a random server number. The random server number is generated by the push manager server 3. In a not limited embodiment, the random server number is of 32 bytes or more.

The method 200 comprises also the step 204 of generating a first signature key. The first signature key is generated by the push manager server 3. In a not limited embodiment, the push manager server 3 generates the first signature key by using the proprietary HMAC (Hash-based Message Authentication Code) cryptography.

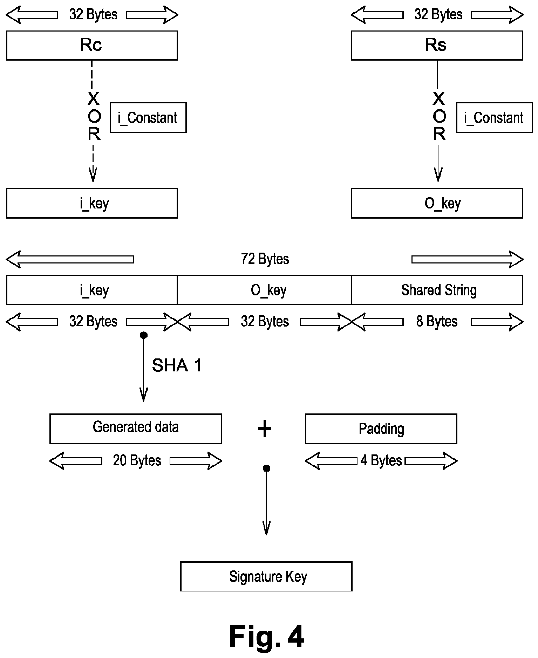

The figure 4 illustrates an example of generating the first signature key via the HMAC.

The First Key (key in left column) depicts the random client number Rc of 32 bytes and the Second Key (key in the right column) depicts the random server number Rs of 32 bytes.

Then, the random client number Rc and the random server number Rs are XORed. The random client number Rc XORed forms an i_Key and the random server number Rs forms an O_Key.

Then, the i_Key and O_Key are used as an input with a "shared string". The shared string is a secret message known by the push manager server 3 and the SIM application. In a not limited example, the shared string is of 8 bytes.

Then, using the SHA1 hash algorithm, a 20 bytes data is generated from the i_Key plus the O_Key plus the sharing string. Furthermore, 4 bytes of padding based on random client and random server are added.

Therefore, in this not limited example, the 20 bytes data plus said 4 bytes of padding form the first signature key.

The method 200 comprises also the step 205 of sending, to the SIM application, the random server number Rs, the first signature key and the session id.

The method 200 comprises also the step 206 of checking the session id. The session id is checked by the SIM application. If the session id is different from the session id sent by the SIM application during the step 202 of sending, to the push manager server 3, the random client number, an application proprietary protocol related fields and a session id, then the SIM application 10 ignore the message that contain the random server number Rs received from the push manager server 3.

The method 200 comprises a step 207 of generating a second signature key if said session id received from the push manager server 3 is similar to the session id sent by the SIM application. The second signature key is generated by the SIM application. The second signature key is generated by the SIM application using for example the HMAC (Hash-based Message Authentication Code) cryptography using the same method that the method depicted in figure 4.

In a not limited example, the first and the second signature keys are identical in order for the push manager server and SIM application to communicate properly. In this embodiment, it is used symmetric key algorithm to generate and verify the signatures.

The method 200 comprises a step 208 of decreasing the provision counter by 1. The SIM application decreases the provision counter by 1. The provision counter is used to limit the number of time we can do the method 200. This is to prevent unwelcome spamming.

The method 200 comprises a step 209 of generating a status code, the status code indicating if the second signature key is successfully generated or unsuccessfully generated. The status code is understood by the SIM application and the push message server 3.

A not limited example of a status code showing that the second signature key is correctly generated is 0x00. A status code showing that the second second signature key is not correct must be different than 0x00.

The method 200 comprises a step 210 of generating a signed acknowledgment, the signed acknowledgment being generated by using the second signature key to encrypt the status code. The status code can be encrypted by using a 3DES Algorithm.

Then, the method 200 comprises a step 211 of sending, to the push message server 3, the signed acknowledgment and the session id.

The method 200 comprises a step 212 of decrypting the signed acknowledgment. More particularly, the encrypted status code is decrypted by using said first signature key. In other terms, the push message server 3 receives the signed acknowledgment from the SIM application and uses the first signature key to decrypt the status code.

Besides, if the status code is successful (i.e. in the example, the status code is equal to 0x00), then the secure communication is established 213.

However, if the status code is unsuccessful (i.e. in the example, the status code is different from 0x00), then the secure communication is not established. When the secure communication is not established, the push manager server 3 triggers the following steps:
- Sending 214, from the push manager server 3, a message of triggering to the SIM application,
- Then, checking 215, if:
   ∘ the TPDA to send back the MO is configured,
   ∘ the provision counter is greater than 0, and
   ∘ the second signature key is configured.

In a not limited embodiment, when the TPDA to send back the MO is configured, the provision counter is greater than 0, and the second signature key is not configured, then the steps of the method 200 for establishing a secure communication between a user terminal 2 comprising a SIM application and a push manager server 3 are triggered.

In a not limited embodiment, when the TPDA to send back the MO is configured, the provision counter is greater than 0, and the second signature key is configured, then the SIM application send 211 the signed acknowledgement (The second signature key is already configured) and the session id to the push manager server 3. Then, the step 212 of decrypting the signed acknowledgment is triggered. More particularly, the encrypted status code is decrypted by using said second signature key. In other terms, the push message server 3 receives the signed acknowledgment from the SIM application and uses the second signature key to decrypt the status code. If the status code is successful (i.e. in the example, the status code is equal to 0x00), then the secure communication is established 213.

## Claims

1. Method (200) for establishing a secure communication between a user terminal (2) comprising a SIM application and a push manager server (3), when said SIM application detects that there is no signature key configured, said method (200) triggers the following steps:
- generating (201) by said SIM application a random client number (Rc),
- sending (202), to the push manager server (3), said random client number (Rc), an application proprietary protocol related fields and a session id,
- generating (203) by said push manager server (3) a random server number (Rs),
- generating (204) by said push manager server (3) a first signature key, the first signature key being derived from the random client number (Rc), the random server number (Rs) and a shared string known by the push server (3) and the SIM application using a cryptographic method,
- sending (205), to said SIM application, said random server number (Rs), said first signature key and said session id,
- checking (206) said session id by said SIM application,
- generating (207) by said SIM application a second signature key if said session id received from the push manager server (3) is similar to said session id sent by said SIM application, the second signature key being derived from the random client number (Rc), the random server number (Rs) and the shared string using the same cryptographic method as the one used to generate the first signature key;
- decreasing (208) by said SIM application a provision counter by 1,
- generating (209) by said SIM application a status code, said status code indicating if the second signature key is successfully generated or unsuccessfully generated, the second signature key being considered as successfully generated if it is identical to the first signature key;
- generating (210) by said SIM application a signed acknowledgment, said signed acknowledgment being generated by using the second signature key to encrypt the status code,
- sending (211), to the push message server (3), said signed acknowledgment and said session id,
- decrypting (212) said encrypted status code by using the first signature key, if said status code is:
∘ successful, then the secure communication is established (213),
∘ unsuccessful, then the secure communication is not established.

2. Method (200) for establishing a secure communication according to claim 1, wherein the second signature key is generated using a proprietary Hash-based Message Authentication Code cryptography.

3. Method (200) for establishing a secure communication according to any of the preceding claims, wherein when the secure communication is not established the push manager server (3) triggers the following steps:
- Sending (214), from the push manager server (3), a message of triggering to the SIM application,
- checking (215) if:
∘ the TPDA to send back the MO is configured,
∘ the provision counter is greater than 0, and
∘ the second signature key is configured.

4. Method (200) for establishing a secure communication according to any of the preceding claims, wherein when the TPDA to send back the MO is configured, the provision counter is greater than 0, and the second signature key is not configured, then the steps of the method (200) are triggered.

5. Method (200) for establishing a secure communication according to any of the preceding claims 1 to 3, wherein when the TPDA to send back the MO is configured, the provision counter is greater than 0, and the second signature key is configured, then the SIM application send (211) the signed acknowledgement and the session id to the push manager server (3).

6. Method (200) for establishing a secure communication according to the preceding claim 5, wherein the signed acknowledgement is generated by using the second signature key to encrypt the status code.

## Patentansprüche

1. Verfahren (200) zum Aufbau einer sicheren Kommunikation zwischen einem User-Terminal (2), das eine SIM-Anwendung umfasst, und einem Push Manager Server (3), wenn die SIM-Anwendung erkennt, das kein Signaturschlüssel konfiguriert ist, dann löst das Verfahren (200) die folgenden Schritte aus:
- Generierung (201) einer zufälligen Kundennummer (Rc) durch die SIM-Anwendung,
- Versand (202) der besagten zufälligen Kundennummer (Rc), einer Anwendung proprietärer protokollbezogener Felder und einer Sitzungs-ID an den Push Manager Server (3),
- Generierung (203) einer zufälligen Servernummer (Rs) durch den Push Manager Server (3),
- Generierung (204) eines Signaturschlüssels durch den Push Manager Server (3), wobei der erste Signaturschlüssel von der zufälligen Kundennummer (Rc), der zufälligen Servernummer (Rs) und einem vom Push Server (3) bekannten gemeinsamen String abgeleitet wird und die SIM-Anwendung ein kryptographisches Verfahren anwendet,
- Versenden (205) der zufälligen Servernummer (Rs), des ersten Signaturschlüssels und der Sitzungs-ID an die SIM-Anwendung,
- Prüfung (206) der Sitzungs-ID durch die SIM-Anwendung,
- Generierung (207) eines zweiten Signaturschlüssels durch die SIM-Anwendung, wenn die vom Push Manager Server (3) empfangene Sitzungs-ID der Sitzungs-ID ähnelt, die von der SIM-Anwendung versandt wurde, wobei der zweite Signaturschlüssel aus der zufälligen Kundennummer (Rc), der zufälligen Servernummer (Rs) und dem gemeinsamen String mit demselben kryptographischen Verfahren abgeleitet wird, das zur Generierung des ersten Signaturschlüssels verwendet wurde;
- Rücksetzung (208) eines Provisionszählers um 1 durch die SIM-Anwendung,
- Generierung (209) eines Status-Codes durch die SIM-Anwendung, wobei der Status-Code anzeigt, ob die Generierung des zweiten Signaturschlüssels erfolgreich oder nicht erfolgreich war, wobei der zweite Signaturschlüssel als erfolgreich generiert gilt, wenn er mit dem ersten Signaturschlüssel identisch ist,
- Generierung (210) einer signierten Bestätigung durch die SIM-Anwendung, wobei die signierte Bestätigung mithilfe des zweiten Signaturschlüssels generiert wird, um den Status-Code zu verschlüsseln,
- Versand (211) der signierten Bestätigung und der Sitzungs-ID an den Push Message Server (3),
- Entschlüsselung (212) des verschlüsselten Status-Codes mithilfe des ersten Signaturschlüssels, wenn der Status-Code:
∘ erfolgreich ist, wird die sichere Verbindung (213) aufgebaut,
∘ nicht erfolgreich ist, wird die sichere Verbindung nicht aufgebaut.

2. Verfahren (200) zum Aufbau einer sicheren Kommunikation nach Anspruch 1, wobei der zweite Signaturschlüssel mithilfe einer proprietären Keyed-Hash Message Authentication Code Kryptografie generiert wird.

3. Verfahren (200) zum Aufbau einer sicheren Kommunikation nach einem der vorhergehenden Ansprüche, wobei beim Nichtaufbau der sicheren Kommunikation der Push Manager Server (3) die folgenden Schritte auslöst:
- Versand (214) vom Push Manager Server (3) einer auslösenden Nachricht an die SIM-Anwendung,
- Prüfung (215), ob:
∘ der TPDA zur Rücksendung der MO konfiguriert ist,
∘ der Provisionszähler größer als 0 ist,
∘ der zweite Signaturschlüssel konfiguriert wurde.

4. Verfahren (200) zum Aufbau einer sicheren Kommunikation nach einem der vorhergehenden Ansprüche, wobei die Schritte des Verfahrens (200) ausgelöst werden, wenn der TPDA zur Rücksendung der MO konfiguriert ist, der Provisionszähler größer als 0 ist und der zweite Signaturschlüssel nicht konfiguriert ist.

5. Verfahren (200) zum Aufbau einer sicheren Kommunikation nach einem der vorhergehenden Ansprüche 1 bis 3, wobei die SIM-Anwendung (211) die signierte Bestätigung und die Sitzungs-ID an den Push-Manager-Server (3) sendet, wenn der TPDA zur Rücksendung der MO konfiguriert ist, der Provisionszähler größer als 0 ist und der zweite Signaturschlüssel konfiguriert ist.

6. Verfahren (200) zum Aufbau einer sicheren Kommunikation nach dem vorhergehenden Anspruch 5, wobei zum Verschlüsseln des Status-Codes die signierte Bestätigung mithilfe des zweiten Signaturschlüssels generiert wird.

## Revendications

1. Procédé (200) permettant d'établir une communication sécurisée entre un terminal utilisateur (2) comprenant une application SIM et un serveur push de gestion (3), lorsque ladite application SIM détecte qu'il n'y a pas de clé de signature configurée, ladite méthode (200) déclenche les étapes suivantes :
- la génération (201) par ladite application SIM d'un numéro de client aléatoire (Rc),
- l'envoi (202), au serveur push de gestion (3), dudit numéro de client aléatoire (Rc), des champs liés au protocole propriétaire de l'application et un identifiant de session,
- la génération (203) par ledit serveur push de gestion (3) d'un numéro de serveur aléatoire (Rs),
- la génération (204) par ledit serveur push de gestion (3) d'une première clé de signature, laquelle étant dérivée du numéro de client aléatoire (Rc), du numéro de serveur aléatoire (Rs) et d'une chaîne partagée connue par le serveur push (3) et l'application SIM, ladite génération étant réalisée à l'aide d'un procédé cryptographique,
- l'envoi (205) à ladite application SIM dudit numéro de serveur aléatoire (Rs), de ladite première clé de signature et dudit identifiant de session,
- la vérification (206) dudit identifiant de session par ladite application SIM,
- la génération (207) par ladite application SIM d'une seconde clé de signature si ledit identifiant de session provenant du serveur push de gestion (3) est similaire audit identifiant de session envoyé par ladite application SIM, la seconde clé de signature étant dérivée du numéro de client aléatoire (Rc), du numéro de serveur aléatoire (Rs) et d'une chaîne partagée utilisant le même procédé cryptographique que celui utilisé pour générer la première clé de signature ;
- la diminution (208) de 1 par ladite application SIM depuis un compteur de provisionnement,
- la génération (209) par ladite application SIM d'un code d'état, ledit code d'état indiquant si la génération de la seconde clé de signature est un succès ou un échec, la seconde clé de signature étant considérée comme générée avec succès si elle est identique à la première clé de signature ;
- la génération (210) par ladite application SIM d'un accusé de réception signé, ledit accusé de réception étant généré par l'utilisation d'une seconde clé de signature pour chiffrer le code d'état,
- l'envoi (211), au serveur push de gestion (3), dudit accusé de réception signé et dudit identifiant de session,
- le décryptage (212) dudit code d'état chiffré via l'utilisation de la première clé de signature, si ledit code d'état est :
∘ un succès, la communication sécurisée sera établie (213),
∘ un échec, la communication sécurisée ne sera pas établie.

2. Procédé (200) permettant d'établir une communication sécurisée selon la revendication 1, selon lequel la seconde clé de signature est générée à l'aide d'une cryptographie HMAC (code d'authentification de messages basé sur un algorithme de hachage) propriétaire.

3. Procédé (200) permettant d'établir une communication sécurisée selon l'une des revendications précédentes, selon lequel le serveur push de gestion (3) déclenche les actions suivantes lorsque la communication sécurisée n'est pas établie :
- l'envoi (214), depuis le serveur push de gestion (3), d'un message de déclenchement vers l'application SIM,
- la vérification (215) pour s'assurer que :
∘ l'automate à pile temporisé (TPDA) pour le renvoi du MO est configuré.
∘ le compteur de consommation est supérieur à 0, et
∘ la seconde clé de signature est configurée.

4. Procédé (200) permettant d'établir une communication sécurisée selon l'une des revendications précédentes, selon lequel le TPDA pour le renvoi du MO est configuré, le compteur de consommation est supérieur à 0 et la seconde clé de signature n'est pas configurée, les étapes du procédé (200) étant ensuite déclenchées.

5. Procédé (200) permettant d'établir une communication sécurisée selon l'une des revendications 1 à 3 précédentes, selon lequel le TPDA pour le renvoi du MO est configuré, le compteur de consommation est supérieur à 0 et la seconde clé de signature est configurée, l'application SIM procédant ensuite à l'envoi (211) de l'accusé de réception signé et de l'identifiant de session au serveur push de gestion (3).

6. Procédé (200) permettant d'établir une communication sécurisée selon la revendication 5 précédente, selon lequel l'accusé de réception signé est généré par l'utilisation de la seconde clé de signature pour chiffrer le code d'état.
